# DEMANDE DE BREVET EUROPEEN

(11) **EP 1 685 782 A1**
(43) Date de publication de la demande: **02.08.2006**
(21) Numéro de dépôt: 05290211.1
(22) Date de dépôt: 01.02.2005
(51) Int. Cl.: A47J 36/20, A47J 27/04, A47J 43/18

(54) **Support conçu pour appliquer la méthode de cuisson de brocolis**

(71) Demandeur: Bienkowski, Wlodzimierz, 93100 Montreuil (FR); Bienkowska, Ewa, 93100 Montreuil (FR)
(72) Inventeur: Bienkowski, Wlodzimierz, 93100 Montreuil (FR); Bienkowska, Ewa, 93100 Montreuil (FR)

(57) **Abrégé**

Un support (1) conçu spécialement pour pouvoir appliquer la nouvelle méthode de cuisson des brocolis.

En utilisant cette méthode il permet de les préparer de façon à ce qu'ils soient en même temps entièrement croustillants, surtout leur partie supérieure, et gardent toutes leur valeurs de goût et de présentation.

La surface du support, perforée ou en grille, est percée de trous (2) de différente taille. Cela permet de placer verticalement les morceaux de la tête de brocolis partagée avant. Ainsi la partie haute du légume, plus délicate, est cuite dans la vapeur et la partie basse, plus grosse, dans l'eau.

Le support, réalisé de préférence en acier inox, est également équipé d'une poignée (5) qui facilite son extraction de la casserole avec les légumes cuits et du bord (3) ou des pieds (4) pour pouvoir placer les tiges de légume à la verticale. Il est utilisable dans chaque casserole avec couvercle d'un diamètre un peu plus grand que le sien.

## Description

La présente invention concerne une nouvelle méthode de cuisson des brocolis ainsi qu' un support (1) conçu spécialement pour l'application de cette nouvelle méthode.

Jusque là, les brocolis étaient cuits, comme d'autres légumes soit dans de l'eau bouillante soit à la vapeur soit sous pression. Les deux parties des brocolis, la partie supérieure dite « fleur » et la partie inférieure dite « tige », étaient cuites ensemble de la même façon, bien que leur fermeté était différente.

Il en résultait qu'une fois la tige cuite et molle, la fleur était trop cuite et, par conséquent, trop molle. Le légume n'avait pas un bon goût et son aspect extérieur n'était pas esthétique.

D'où l'idée d'améliorer la façon de préparer des brocolis ; tout en gardant une tige moelleuse et bien cuite, la fleur, elle, reste croustillante et souple. Pour atteindre ce but il faut procéder de la façon suivante :
Il faut partager la tête des brocolis pour avoir des fleurs une à une. Leur tiges devraient avoir environ 3 cm {c'est la hauteur du bord (3) ou des pieds (4)} afin de garder un maximum de partie consommable. Aux extrémités de la tête, les fleurs sont plus petites et les tiges plus longues et plus fines, alors qu'au centre les tiges sont plus courtes et plus grosses et leur fleurs plus larges.
En prenant cela en considération le support dispose de trous de différents diamètres.

Après les avoir lavés sous l'eau courante, il faut disposer les morceaux ainsi partagés sur le support (1) décrit et dessiné ci-joint.
Ce support (1), réalisé en une matière première pouvant supporter la température de cuisson, a été conçu spécialement pour faciliter d'une part la mise en place des brocolis dans la casserole et d'autre part leur cuisson. Sans ce support les brocolis ne peuvent pas être positionnés verticalement pendant la cuisson ce qui empêche l'application de notre méthode et, par conséquent, on ne peut obtenir le goût et l'aspect souhaité du légume cuit.
Avant de disposer les brocolis sur le support, il convient de soulever à la verticale la poignée (5) conçue pour faire entrer et sortir le support (1) avec des brocolis de la casserole. Elle est surtout utile pour sortir le support avec des brocolis après la cuisson à cause de la température très élevée.

En maintenant la poignée (5) à la verticale, on place les morceaux des brocolis dans les trous (2) adaptés aux dimensions des tiges : les morceaux plus gros dans les trous plus larges et les morceaux plus fins dans les trous plus petits. Si ces derniers sont plus nombreux on peut les mettre par 2 ou 3 dans les trous plus grands.

Les tiges doivent se trouver en dessous de la surface du support et les fleurs s'appuient sur sa surface supérieure. A l'aide de la poignée (5) on place le support (1) avec les brocolis dans une casserole vide dont le diamètre doit être au moins un peu plus grand que celui du support. La poignée (5) peut être laissée à la verticale, ce qui facilitera l'extraction du support après la cuisson.

Pour améliorer le goût des brocolis on peut les saler légèrement à la surface des fleurs mais ceci est facultatif.

Maintenant on met dans la casserole de l'eau bouillante en évitant de la faire couler directement sur les fleurs. L'eau ne doit pas dépasser la surface du support. On met le couvercle. Le temps de cuisson est d'environ 8 minutes (pour une casserole classique).

Grâce au support (1), la tige qui est en dessous est cuite directement dans l'eau, tandis que la fleur, étant plus délicate et devenant molle plus rapidement que la tige, est cuite à la vapeur qui est dégagée par les petits trous disposés sur toute la surface du support ou bien par les trous do grillage si c'est la forme choisie. L'éventuel sel se trouvant sur les fleurs se dissout et donne le goût régulièrement à la fleur et à la tige.

Après environ 8 minutes on soulève le couvercle en laissant sortir la vapeur et ensuite, grâce à la poignée (5), on extrait le support (1) avec les brocolis qui peuvent être servis aussitôt.

Les méthodes traditionnelles de cuisson de brocolis ne permettaient pas l'obtention d'une tige moelleuse tout en conservant des fleurs croustillantes et assez dures.

Grâce à cette nouvelle méthode on obtient une fleur souple et croustillante ainsi qu'une tige bien cuite sans que ces deux éléments soient séparés à la cuisson bien qu' ils aient besoin d'un temps de cuisson différent. Ceci améliorera nettement le goût du légume et rendra au plat un aspect visuel plus appétissant.

Pour pouvoir réaliser ce nouveau mode de cuisson de brocolis on a conçu un support (1) qui n'existait pas encore sur le marché. On peut l'utiliser pour toute sorte de casserole avec couvercle dont le diamètre est au moins un peu plus grand que celui du support en question.

Le support (1), dont la surface est perforée par plusieurs petits trous assurant l'évaporation régulière, doit être réalisé de préférence en acier inox ou en toute autre matière première supportant la température de cuisson de l'eau Il peut également être réalisé en grillage (de préférence en fil d'acier inox) ce qui permet aussi une bonne évaporation. En général il devrait être rond avec un diamètre d'environ 21 cm suffisant pour une tête moyenne de brocolis. La hauteur du bord (3) ou des pieds (4) est d'environ 3 cm . Il est également équipé d'une poignée (5) réalisée en matière première supportant la température de la cuisson , de préférence en fil d'acier inox, placée en diagonale dont la longueur est égale à la moitié du périmètre du support . La poignée est terminée par des crochets (6) qui la relient au support (1) grâce aux ouvertures spéciales faites dans sa surface. La surface de support est percée par plusieurs petits trous ainsi que par 12 grands trous (2) dont 8 d'un diamètre de 4 cm et 4 d'un diamètre de 3 cm. Les trous de 4 cm sont destinés aux tiges plus grands du milieu du légume et les trous de 3 cm aux tiges fins des abords de la tête du légume.

### Explication des croquis :

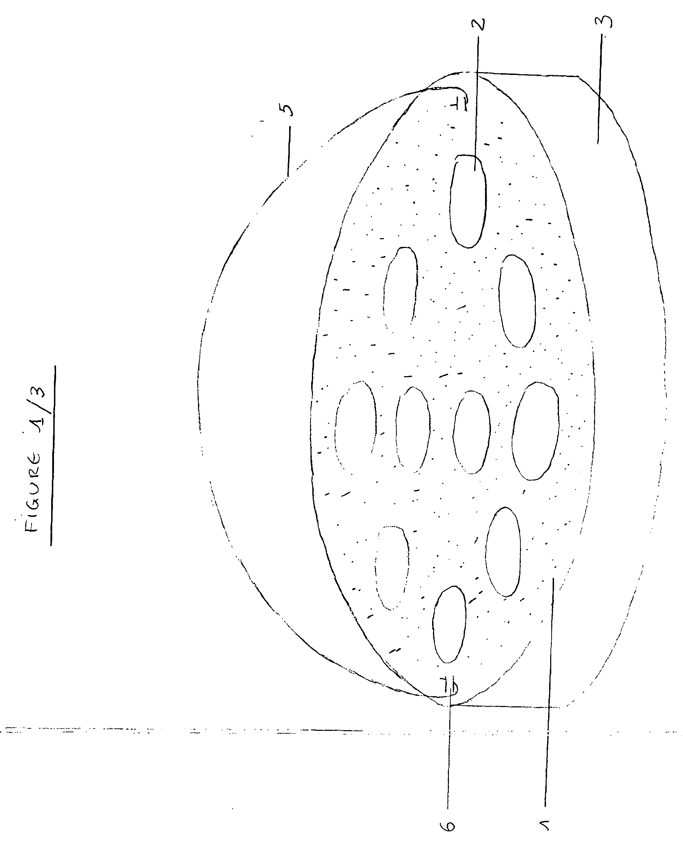

- fig.1 représente le support équipé de rebord

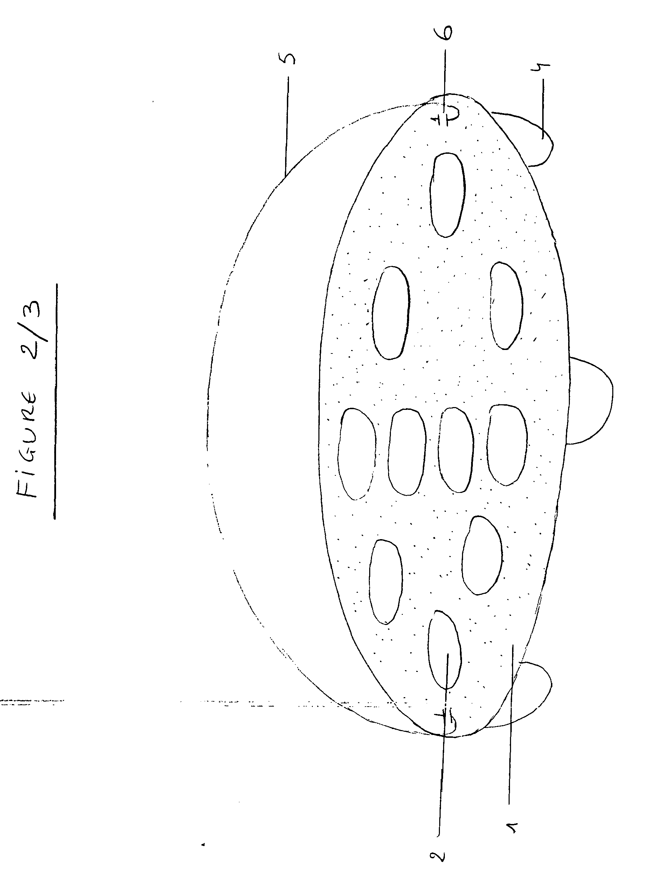

- fig.2 représente le support équipé des pieds

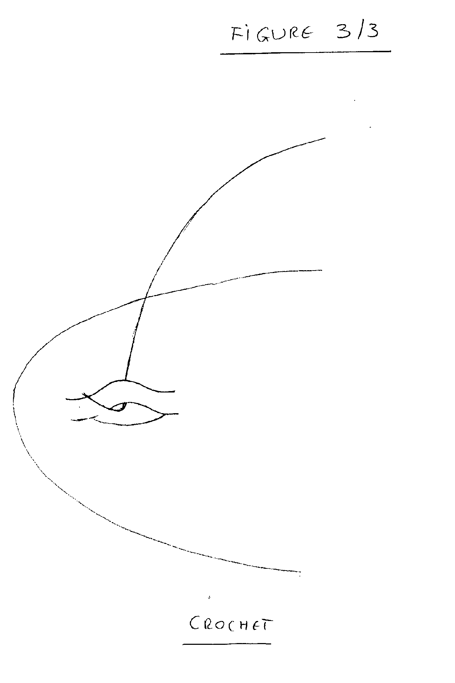

- fig.3 représente la liaison de la poignée et du support par des crochets

## Revendications

1. Dispositif pour la préparation des brocolis permettant la cuisson parallèle de la fleur de légume dans la vapeur et de sa tige dans l'eau bouillante **caractérisé par** un support (1) perforé des trous de différent diamètre (2), surélevé par un rebord (3) ou des pieds (4), équipé d'une poignée (5) avec des crochets (6) ;

2. Dispositif selon la revendication 1 **caractérisé en ce qu'**il est réalisé en une matière première pouvant supporter la température de cuisson dans l'eau, de préférence en acier inox ;

3. Dispositif selon la revendication 1 **caractérisé en ce qu'**il est réalisé de façon à avoir la surface perforée par plusieurs petits trous facilitant l'évaporation régulière, aussi sous forme de grille réalisée en une matière première pouvant supporter la température de cuisson dans l'eau, de préférence en acier inox ;

4. Dispositif selon la revendication 1 **caractérisé en ce qu'**il est surélevé soit par un rebord (3) tout au tour du support soit par les pieds (4) dont la hauteur permet de soutenir la tige du légume verticalement , disposés de façon à ce qu'il garde équilibre une fois mis dans la casserole ;

5. Dispositif selon la revendication 1 **caractérisé en ce qu'**il est perforé des trous de différents diamètres permettant la mise facile des tiges de légume et leur maintien à la verticale pendant la cuisson ;

6. Dispositif selon la revendication 1 **caractérisé en ce qu'**il est équipé d'une poignée (5) réalisée en une matière première supportant la température de la cuisson, de préférence en acier inox, liée au support par des crochets (6) placés dans des ouvertures spéciales faites dans la surface du support ;

7. Méthode de préparation des brocolis consistant à la cuisson simultanée du légume en verticale de façon à ce que la partie basse soit cuite dans l'eau et la partie haute dans la vapeur ce qui permet d'obtenir sa cuisson régulière pour être entièrement croustillant grâce à l'utilisation du support compris dans les dispositifs selon une des revendications 1 à 6 , conçu spécialement pour l'application de cette méthode.
